# EUROPÄISCHE PATENTSCHRIFT

(11) **EP 3 519 277 B1**
(45) Veröffentlichungstag und Bekanntmachung des Hinweises auf die Patenterteilung: **10.11.2021**
(21) Anmeldenummer: 17787319.7
(22) Anmeldetag: 29.09.2017
(51) Int. Cl.: B62D 15/02, G01B 11/26, G01M 17/06

(54) **VORRICHTUNG UND VERFAHREN ZUR ERFASSUNG DER LENKRADSTELLUNG, DES LENKRADEINSCHLAGWINKELS UND DER NEIGUNG DES LENKRADES EINES FAHRZEUGS**
DEVICE AND METHOD FOR MEASURING THE STEERING WHEEL POSITION, THE STEERING WHEEL ANGLE, AND THE INCLINATION OF THE STEERING WHEEL OF A VEHICLE
DISPOSITIF ET PROCÉDÉ DE DÉTECTION DE LA POSITION DU VOLANT, DE L'ANGLE DE BRAQUAGE DU VOLANT ET DE L'INCLINAISON DU VOLANT D'UN VÉHICULE

(30) Priorität: 30.09.2016 DE 102016118593
(43) Veröffentlichungstag der Anmeldung: 07.08.2019
(73) Patentinhaber: Dürr Assembly Products GmbH, 66346 Püttlingen (DE)
(72) Erfinder: MÜLLER, Stefan, 66557 Illingen (DE); WEISGERBER, Rainer, 66793 Saarwellingen (DE); KURT, Ismail, 66333 Völklingen (DE); TENTRUP, Thomas, 66663 Merzig-Mechern (DE)
(74) Vertreter: Patentanwaltskanzlei Vièl & Wieske PartGmbB
(86) Internationale Anmeldenummer: PCT/DE2017/100835
(87) Internationale Veröffentlichungsnummer: WO 2018/059628

(56) Entgegenhaltungen:
- DE-A1-102010 054 222
- DE-A1-102012 025 530
- DE-U1-202012 001 027
- JP-A- 2009 090 687
- US-A1- 2013 227 848
- US-A1- 2014 219 509
- US-A1- 2015 317 527

## Beschreibung

Die vorliegende Erfindung betrifft eine Vorrichtung zur Ermittlung der Lenkradstellung, des Lenkradeinschlagwinkels und der Neigung des Lenkrades eines Fahrzeugs nach dem Oberbegriff des Anspruchs 1 sowie ein Verfahren zur Erfassung der Lenkradstellung, des Lenkradeinschlagwinkels und der Neigung des Lenkrades eines Fahrzeugs nach dem Oberbegriff des Anspruchs 9.

Aus der DE 10 2005 042 446 B3 ist eine Lenkradwaage zur Messung der Ausrichtung des Lenkrades eines Kraftfahrzeuges bezüglich der Horizontalen bekannt. Diese Lenkradwaage weist Mittel zur lösbaren Befestigung der Lenkradwaage am Lenkrad in dessen Symmetrielage auf sowie eine variabel einstellbare Abstützvorrichtung zur Fixierung der Lenkradwaage an der Karosserie des Fahrzeuges. Weiterhin ist ein Inklinometer vorgesehen zur Erfassung der Abweichung von der Horizontalen. Außerdem erfolgt eine Kraftmessung in den lösbaren Befestigungen am Lenkrad zur Messung von Drehmomenten zwischen Lenkradwaage und Lenkrad. Die Lenkradwaage wird dabei dazu verwendet, dass bei einem Verfahren zur Einstellung der Einzelspurwinkel der Vorderachse eines Kraftfahrzeuges das Lenkrad so justiert ist, dass bei Geradeausfahrt des Kraftfahrzeuges das Lenkrad in Bezug zu seiner Symmetrielage horizontal ausgerichtet ist.

Aus der JP 2009 090687 A ist eine Vorrichtung bekannt, bei dem ein Fahrzeug mit einer Lenkung nach dem "steer-by-wire" Prinzip ausgestattet ist. Es ist ein an sich bekannter Lenkwinkelsensor vorhanden, der an der Lenksäule den Lenkradeinschlagswinkel misst, zur Erfassung eines Lenkradeinschlagswinkels des Lenkrades ausgehend von einer Neutralstellung. Um eine redundante Messvorrichtung für den Lenkwinkel zu haben für den Fall einer Funktionsstörung des Lenkwinkelsensors, wird eine Infrarotkamera benutzt, die auf der Oberseite der Lenksäule angebracht ist mit einem Erfassungswinkel zur Erfassung der Gesichtszüge des Fahrzeugführers, um dessen Aufmerksamkeit zu kontrollieren und ggf. Warnsignale bei fehlender Aufmerksamkeit zu geben. Dazu ist auf der Seite des Lenkradkranzes, der der Infrarotkamera zugewandt ist, ein Referenzobjekt angebracht, das von der Infrarotkamera erfasst werden kann. Aus einer Positionsänderung dieses Referenzobjektes wird über eine Auswertung des Bildes der Infrarotkamera der Lenkradeinschlagswinkel abgeleitet. Da die Infrarotkamera aufgrund ihres Montageortes nur ein Referenzobjekt auf dem oberen Teil des Lenkradkranzes erfassen kann, wird auf dem Umfang des Lenkradkranzes noch ein weiteres Referenzobjekt angebracht, das optisch von dem ersten Referenzobjekt unterschieden werden kann. Damit wird es möglich, auch dann einen Lenkradeinschlagwinkel abzuleiten, wenn das Lenkrad so weit gedreht wurde, dass sich der Lenkradkranz in einer Position befindet, bei der das erste Referenzobjekt nach unten gedreht ist, d.h. aus dem Erfassungsbereich der Infrarotkamera heraus. Vorteilhaft ist dann das weitere Referenzobjekt im Erfassungsbereich der Infrarotkamera. Da die beiden Referenzobjekte voneinander unterscheidbar sind, kann der Lenkradeinschlagswinkel abgeleitet werden.

Aus der US 2014/219509 A1 ist es bekannt, dreidimensionale Messsysteme vorzusehen, um Parameter der Fahrwerkgeometrie hochpräzise zu vermessen. Dazu müssen die Koordinaten der Messsysteme mit einer ebensolchen Präzision bekannt sein. Um diese Messsysteme immer wieder hinsichtlich ihrer Position zu vermessen, werden Targets vorzusehen, deren Position bekannt ist. Aus der Vermessung der Targets durch die Messsysteme kann dann wiederum deren Position bestimmt werden.

Die DE 10 2012 025 530 A1 betrifft eine Vorrichtung zur Erfassung der Lenkradstellung im Sinne des Lenkradeinschlagwinkels. Der Lenkradeinschlagwinkel kann dabei auch mittels einer Kamera erfasst und ausgewertet werden.

Der vorliegenden Erfindung liegt die Aufgabe zu Grunde, die Erfassung des Lenkradeinschlagwinkels, der Lenkradstellung und der Neigung des Lenkrads zu vereinfachen.

Diese Aufgabe wird nach der vorliegenden Erfindung gemäß Anspruch 1 gelöst durch eine Vorrichtung zur Ermittlung der Lenkradstellung, des Lenkradeinschlagwinkels und der Neigung des Lenkrades eines Fahrzeugs, die wenigstens zwei Kameras aufweist, mit denen jeweils das Lenkrad des Fahrzeugs aufnehmbar ist. Weiterhin weist die Vorrichtung wenigstens drei Referenzobjekte auf, die an dem Lenkrad lösbar befestigbar sind. Die Vorrichtung ist eingerichtet, um Bildverarbeitungsmethoden der Photogrammetrie durchzuführen, um die Neigung des Lenkrades und den Lenkradeinschlagwinkel zu ermitteln.

Das Lenkrad ist mit den beiden Kameras aufnehmbar, wenn deren Raumwinkel der Bildebene so ausgerichtet ist, dass jeweils das Lenkrad von diesem Raumwinkel mit umfasst ist. Das bedeutet, dass die beiden Kameras so ausgerichtet sein müssen, dass sich das Lenkrad jeweils im Bildbereich der Kameras befindet.

Mit dieser Anordnung wird es möglich, mittels der beiden Kameras die Lage der drei Referenzobjekte im Raum zu bestimmen. Über die Lage dieser drei Referenzobjekte im Raum ist die Ebene definiert, in der diese drei Referenzobjekte liegen. Damit ist auch die Ebene des Lenkrades definiert, weil die Referenzobjekte eindeutig zu dieser Lenkradebene an dem Lenkrad befestigt sind.

Für die Auswertung erweist es sich dabei als vorteilhaft, wenn die drei Referenzobjekte eine Ebene aufspannen, die identisch ist zur Ebene des Lenkrades bzw. parallel zur Ebene des Lenkrades. Wenn die drei Referenzobjekte eine Ebene aufspannen, die zwar definiert ist zur Ebene des Lenkrades, die aber schräg zur Ebene des Lenkrades verläuft, dann müssen Randinformationen bekannt sein, die es ermöglichen, aus der durch die Referenzobjekte aufgespannten Ebene die Lenkradebene zu ermitteln. Diese Randinformationen betreffen beispielsweise die geometrische Anordnung der Referenzobjekte zueinander bzw. die vertikalen Abstände jedes einzelnen Referenzobjektes zu der Lenkradebene.

Allgemein müssen für die gemeinsame Auswertung und die dreidimensionale Vermessung der wenigstens drei Referenzobjekte die wenigstens zwei Kameras ein gemeinsames Bezugsystem aufweisen. Die Lage der wenigstens drei Referenzobjekte im Raum wird dann im gemeinsamen Bezugssystem der wenigstens zwei Kameras ermittelt. Sofern sich das Fahrzeug in einem Fahrzeugprüfstand befindet, ist es besonders vorteilhaft, wenn das gemeinsame Bezugssystem der wenigstens zwei Kameras auf das Koordinatensystem des Prüfstands kalibriert ist. In derartigen Prüfständen werden die Parameter der Fahrwerkgeometrie vermessen. Dies betrifft insbesondere auch die Spur- und Sturzwinkel der Räder des Fahrzeugs. In diesem Zusammenhang erweist es sich als besonders vorteilhaft, wenn die Messeinheiten zur Erfassung der Parameter der Fahrwerkgeometrie und die wenigstens zwei Kameras gemäß der Vorrichtung nach der vorliegenden Erfindung auf dasselbe Koordinatensystem kalibriert sind.

Üblicherweise erfolgt diese Kalibrierung mittels einer Kalibrierlehre des Prüfstands.

Bei der Ausgestaltung der Vorrichtung nach Anspruch 2 sind bei der lösbaren Befestigung zwei der wenigstens drei Referenzobjekte jeweils im Bereich des oberen Übergangs von einer Quertraverse im Lenkrad zum Lenkradkranz angeordnet, wobei eines dieser beiden Referenzobjekte auf der linken Seite der Quertraverse befestigbar ist und das andere dieser beiden Referenzobjekte auf der rechten Seite der Quertraverse, wobei diese beiden Referenzobjekte von dem wenigstens einen weiteren Referenzobjekt unterscheidbar sind.

Diese Ausgestaltung der Vorrichtung macht vorteilhaft davon Gebrauch, dass Lenkräder üblicherweise eine Quertraverse aufweisen, über die der Lenkradkranz an der Mittelachse des Lenkrades befestigt ist. Oberhalb dieser Quertraverse ist das Lenkrad üblicherweise zum Lenkradkranz hin offen. Dadurch wird es dem Fahrzeugführer ermöglicht, die Anzeigeelemente im Kombiinstrument des Armaturenbretts bei einer "Geradeaus-Stellung" des Lenkrades bzw. einem geringen Lenkradeinschlag im Blick zu behalten. Gegebenenfalls haben die Lenkräder noch ein Verbindungselement von der Mittelachse des Lenkrades nach unten zum Lenkradkranz.

Die Anbringung der Referenzobjekte jeweils im Bereich des oberen Übergangs von einer Quertraverse im Lenkrad zum Lenkradkranz bedeutet dabei, dass diese Referenzobjekte unmittelbar in dem Übergang angeordnet sein können oder in einem definierten Abstand zu dem Übergang mit einer definierten Richtung zu diesem Übergang. Damit können die Referenzobjekte beispielsweise auch an einem Rahmen bzw. einem Träger befestigt werden, der in das Lenkrad eingesetzt wird und dabei über die beiden oberen Übergänge von einer Quertraverse im Lenkrad zum Lenkradkranz verspannt wird.

Bei der Ausgestaltung nach Anspruch 2 ergibt sich vorteilhaft, dass die beiden Referenzobjekte jeweils an einem definierten Punkt des Lenkrades angebracht sind. Weiterhin sind diese beiden Punkte bei üblichen Lenkrädern achsensymmetrisch bezüglich einer Mitteillinie in der Lenkradebene, die in vertikaler Richtung (d.h. von dem untersten Punkt des Lenkradkranzes zum obersten Punkt des Lenkradkranzes) durch den Mittelpunkt des Lenkrades verläuft.

Das bedeutet, dass bei einem optimal justierten Lenkrad bei einer Geradeausfahrt die Verbindungslinie dieser beiden Referenzobjekte horizontal verläuft. Der Winkel zwischen der Verbindungslinie der beiden Referenzobjekte und der Schnittgeraden die zwischen einer horizontalen Ebene und der durch alle drei Referenzobjekte ermittelten Lenkradebene entsteht, stellt den Lenkradeinschlagwinkel dar.

Um die "richtige" Kombination der beiden Referenzobjekte zu erfassen, deren Verbindungslinie bei einer Geradeausfahrt horizontal verläuft, sind vorteilhaft diese beiden Referenzobjekte von dem wenigstens einen weiteren Referenzobjekt unterscheidbar. Diese Unterscheidbarkeit kann gegeben sein, indem diese Referenzobjekte hinsichtlich Form, Größe und/oder Farbe anders aussehen als das wenigstens eine weitere Referenzobjekt. Diese beiden Referenzobjekte können auch von dem wenigstens einen weiteren Referenzobjekt unterschieden werden, indem der Abstand zwischen den Referenzobjekten ausgewertet wird. Der Abstand zwischen den beiden Referenzobjekten entspricht bei der Ausgestaltung nach Anspruch 2 näherungsweise dem Durchmesser des Lenkradkranzes und ist damit durchweg größer als der Abstand zwischen zwei anderen Referenzobjekten.

Damit wird es möglich, zu ermitteln, ob der Lenkradeinschlagwinkel seinem Sollwert entspricht. Der Lenkradeinschlagwinkel entspricht seinem Sollwert, wenn bei einem Lenkwinkel der Räder des Fahrzeugs, der einer Geradeausfahrt entspricht, die Orientierung der Verbindungslinie der beiden Referenzobjekte einem Sollwert entspricht. Dieser Sollwert entspricht üblicherweise einem horizontalen Verlauf, kann aber u.U. auch einen definierten Lenkradeinschlagwinkel darstellen.

Die Vorrichtung kann beispielsweise genutzt werden, um einem Werker anzuzeigen, ob er überhaupt das Lenkrad abziehen muss und in welcher Richtung und ggf. um welchen Betrag er das Lenkrad gedreht wieder aufsetzen muss, damit diese Bedingung der "Geradeausstellung des Lenkrades" erreicht wird. Dies erfolgt nur, soweit eine Justierung des Lenkrades durch ein Abziehen und erneutes Aufsetzen des Lenkrades überhaupt vorgesehen ist. Dies ist nur bei LKWs der Fall. Eine solche Vorgehensweise ist beispielsweise beschrieben in der WO 2015/018396 A1.

Eine andere bekannte Methode der Einstellung des Lenkrades besteht darin, die Spurwinkel der lenkbaren Räder so einzustellen, dass diese der momentanen Lenkradstellung hinsichtlich des Lenkradeinschlagwinkels exakt entsprechen. Dabei erfolgt eine Verrechnung der erfassten Lenkradstellung (Lenkradeinschlagwinkel) in den Sollwerten der Einzelspurwinkel der lenkbaren Räder. Eine Abweichung des Istwertes von dem Sollwert kann dem Werker angezeigt werden, so dass dieser die entsprechende Einstellung der Einzelspurwinkel vornimmt.

Gerade bei einer Einstellung der Einzelspurwinkel der lenkbaren Räder relativ zum Lenkradeinschlagwinkel ist es wesentlich, dass die Messeinheit zur Erfassung des Lenkradeinschlagwinkels sowie die Messeinheit(en) zur Erfassung der Einzelspurwinkel auf dasselbe Bezugssystem kalibriert sind. Dies gilt sowohl bei einer Nachjustierung des Lenkrades als auch bei einer Einstellung der Einzelspurwinkel unter Berücksichtigung des Lenkradeinschlagwinkels.

Bei einer Auswertung in Verbindung mit dem dritten Referenzobjekt kann wiederum die Ebene des Lenkrades bestimmt werden.

Dabei kann besonders vorteilhaft berücksichtigt werden, dass der Lenkradeinschlagwinkel (und damit auch die der "Geradeausrichtung" entsprechende Lenkradstellung) von der Neigung des Lenkrades abhängt. Soweit das dritte Referenzobjekt mit ausgewertet wird, kann auch dieser Effekt berücksichtigt werden.

Bei der Ausgestaltung nach Anspruch 3 sind Referenzhilfsobjekte vorgesehen, die außerhalb des Lenkradumfangs angeordnet sind. Diese Referenzhilfsobjekte sind jeweils zu einem der beiden Referenzobjekte, die sich jeweils im Bereich des oberen Übergangs von der Quertraverse im Lenkrad zum Lenkradkranz befinden, derart zugeordnet, dass die Verbindungslinie zwischen den beiden Referenzhilfsobjekten mit der Verbindungslinie der beiden genannten Referenzobjekte übereinstimmt oder parallel zu dieser verläuft.

Dies erweist sich insofern als vorteilhaft, weil die im Zusammenhang mit Anspruch 2 als vorteilhaft beschriebene Auswertungsmöglichkeit der Lage der beiden Referenzobjekte auch für die beiden Referenzhilfsobjekte erhalten bleibt.

Da die beiden Referenzhilfsobjekte weiter auseinander liegen als die beiden Referenzobjekte wird vorteilhaft die Genauigkeit bei der Auswertung der Lage der Verbindungslinie zur Horizontalen verbessert.

Die Referenzhilfsobjekte können beispielsweise angebracht werden, indem die Referenzobjekte jeweils eine Aufnahme für ein Verbindungselement aufweisen. Es kann weiterhin eine gerade Stange vorgesehen werden, auf der die beiden Referenzhilfsobjekte angeordnet sind sowie zwei Verbindungselemente, die in Längsrichtung der Stange verstellbar sein können. Werden die Verbindungselemente so entlang der Stange verschoben, dass deren Abstand dem Abstand der Aufnahmen der beiden Referenzobjekte entspricht, kann die Stange mit den Referenzhilfsobjekten auf die Referenzobjekte aufgesetzt werden. Bei dieser Ausführungsform verläuft die Verbindungslinie der beiden Referenzhilfsobjekte parallel zur Verbindungslinie der Referenzobjekte.

Bei der Ausgestaltung nach Anspruch 4 sind die drei Referenzobjekte mittels eines Rahmens miteinander verbunden. Der Rahmen besteht aus drei an einem ihrer Enden in einem gemeinsamen Mittelpunkt miteinander verbundenen Längselementen. Die Referenzobjekte sind jeweils an dem anderen Ende der Längselemente derart federelastisch befestigt, dass die Referenzobjekte dabei in Längsrichtung der Längselemente gedrückt werden.

Dies stellt eine einfache Möglichkeit dar, die lösbare Befestigung der drei Referenzobjekte am Lenkrad zu realisieren. Die Referenzobjekte können zusätzlich noch so geformt sein, dass diese im Wesentlichen zylinderförmig ausgestaltet und drehbar um die Mittelachse des Zylinders gelagert sind. Die Zylindermantelfläche kann der Innenseite des Innenteils eines Torus entsprechen, der kreisförmig aufgeschnitten ist.

Da der Lenkradkranz torusförmig ist, ergibt sich bei einer solchen Ausgestaltung besonders vorteilhaft, dass das jeweilige Referenzobjekt in einer definierten Lage am Lenkradkranz anliegt.

Auch wenn die Form der Referenzobjekte weniger optimiert an die geometrische Form des Lenkradkranzes angepasst ist, ergibt sich durch die federelastische Lagerung, dass die Referenzobjekte definiert an den Lenkradkranz angedrückt werden.

Bei der Ausgestaltung nach Anspruch 5 ist der Rahmen so ausgestaltet, dass bei einer Befestigung der drei Referenzobjekte am Lenkrad der Mittelpunkt des Rahmens oberhalb der Verbindungslinie der beiden unteren Referenzobjekte liegt.

Damit kann vorteilhaft geometrischen Randbedingungen Rechnung getragen werden, die sich aus der üblichen Gestaltung von Lenkrädern ergeben. Zum einen kommt es bei Lenkrädern häufig vor, dass die Quertraverse nicht exakt horizontal verläuft sondern dass die Quertraverse aus zwei Elementen besteht, die vom Mittelpunkt des Lenkrades ausgehend schräg nach unten verlaufen. Weiterhin kommt es häufig vor, dass der Mittelpunkt des Lenkrades als Kreis ausgebildet ist, in den beispielsweise das Betätigungselement für die Hupe integriert ist. Die Breite der Quertraverse ist deswegen häufig geringer als dies dem Durchmesser des Kreises des Lenkrades um den Mittelpunkt entspricht.

Mit der beschriebenen geometrischen Ausbildung und Anordnung des Rahmens kann dem Rechnung getragen werden, wobei dennoch die beiden entsprechenden Referenzobjekte jeweils im Bereich des oberen Übergangs der Quertraverse im Lenkrad zum Lenkradkranz angeordnet werden können.

Vorteilhaft weist bei dieser Ausgestaltung der Rahmen sowohl zur Quertraverse als auch zum Kreis um den Mittelpunkt des Lenkrades einen Abstand auf, so dass der Rahmen (und damit auch die Referenzobjekte) einfach montiert und wieder gelöst werden können.

Bei der Ausgestaltung nach Anspruch 6 sind die beiden Kameras auf derselben Fahrzeugseite außerhalb des Fahrzeugs angeordnet.

Es erweist sich für einen Prüfstand als vorteilhaft, wenn die Kameras außerhalb des Fahrzeugs angeordnet sind. Dadurch entsteht kein Verlust an Taktzeit, weil die Kameras zuerst (beispielsweise durch ein geöffnetes Fenster) im Fahrzeuginnenraum auf eine definierte Position verfahren werden müssen.

Wenn die beiden Kameras auf derselben Fahrzeugseite angeordnet sind, wird der benötigte Montageraum im Prüfstand begrenzt auf diese eine Fahrzeugseite. Der entsprechende Montageraum auf der anderen Fahrzeugseite steht dann für die Installation von anderem Equipment zur Verfügung oder auch als Raum, in dem sich der Werker ungestört durch installierte Mess- und Auswerteeinrichtung bewegen kann.

Die beiden Kameras können so ausgestaltet werden, dass jede der beiden Kameras jeweils einen Raumwinkel aufweist, mit dem die Erfassung eines Lenkrades für beide Kameras sowohl auf der rechten Fahrzeugseite als auch auf der linken Fahrzeugseite möglich ist.

Bei einer solchen Ausgestaltung können in dem Prüfstand sowohl Rechtslenker- als auch Linkslenkerfahrzeuge gemessen werden.

Anspruch 7 betrifft eine Ausgestaltung, bei der jede der beiden Kameras jeweils einen Raumwinkel aufweist, mit dem die Erfassung eines Lenkrades für beide Kameras entweder auf der rechten Fahrzeugseite oder auf der linken Fahrzeugseite möglich ist.

Diese Ausgestaltung ermöglicht im Unterschied zur Ausgestaltung nach Anspruch 6, dass die beiden Kameras darauf ausgerichtet sind, entweder für ein Rechtslenkerfahrzeug oder für ein Linkslenkerfahrzeug verwendet zu werden. Dadurch lässt sich die Messgenauigkeit erhöhen.

Zum einen ist der Raumwinkel geringer, in dem die Kameras ein Bild erfassen.

Zum anderen sind die Kameras so ausgerichtet, dass sie mit einer geringeren Schräge auf die Ebene ausgerichtet sind, in der die Referenzobjekte detektiert werden sollen. Dies gilt insbesondere, wenn die beiden Kameras für ein Linkslenkerfahrzeug auf der linken Seite des Fahrzeugs angeordnet sind und für ein Rechtslenkerfahrzeug auf der rechten Seite des Fahrzeugs.

Um mit einer solchen Messanordnung sowohl Linkslenker- sowie auch Rechtslenkerfahrzeug messen zu können, ist es möglich, sowohl eine Kameraanordnung bestehend aus zwei Kameras auf der linken Fahrzeugseite anzuordnen sowie eine weitere derartige Kameraanordnung auch auf der rechten Fahrzeugseite anzuordnen.

Alternativ zur Anordnung zweier Kameraanordnungen kann auch vorgesehen werden, lediglich eine Kameraanordnung vorzusehen und diese in ihrer Lage beweglich auszuführen, so dass diese von einer definierten Position und Ausrichtung auf der linken Fahrzeugseite bewegbar ist zu einer definierten Position und Ausrichtung auf der rechten Fahrzeugseite (und umgekehrt).

Anspruch 8 betrifft eine Ausgestaltung, bei der die beiden Kameras auf unterschiedlichen Fahrzeugseiten angeordnet sind. Jede der beiden Kameras weist jeweils einen Raumwinkel auf, mit dem die Erfassung eines Lenkrades für beide Kameras sowohl auf der rechten Fahrzeugseite als auch auf der linken Fahrzeugseite möglich ist.

Damit wird es wiederum möglich, mit einer einzigen Kameraanordnung sowohl Linkslenker- als auch Rechtslenkerfahrzeuge zu vermessen.

Anspruch 9 betrifft ein Verfahren zur Erfassung der Lenkradstellung, des Lenkradeinschlagwinkels und der Neigung des Lenkrades eines Fahrzeugs, bei dem das Lenkrad mittels wenigstens zwei Kameras aufgenommen wird, deren Raumwinkel der Bildebene so ausgerichtet ist, dass jeweils das Lenkrad von diesem Raumwinkel mit umfasst ist, wobei von den wenigstens zwei Kameras wenigstens drei Referenzpunkte an dem Lenkrad erfassbar sind. Die Ermittlung der Neigung des Lenkrades und des Lenkradeinschlagwinkels erfolgt, indem auf Basis der aufgenommenen Bilder Bildverarbeitungsmethoden der Photogrammetrie durchgeführt werden.

Die Referenzpunkte können Punkte an dem Lenkrad sein, die von Ihrer Lage auf dem Lenkrad (bzw. in Bezug zum Lenkrad) eindeutig definiert sind und die mit ausreichender Sicherheit und Genauigkeit von den Kameras erkannt werden können. Bei dem Verfahren nach Anspruch 9 ist es somit nicht unbedingt notwendig, entsprechend der Vorgehensweise bei den Vorrichtungsansprüchen 1 bis 8 Referenzobjekte an dem Lenkrad zu befestigen.

Vorteilhaft liegen dabei zwei dieser Referenzpunkte bei einem Lenkradeinschlagwinkel des Fahrzeugs, der einer Geradeausfahrt des Fahrzeugs entspricht, auf einer horizontalen Linie, wie dies im Zusammenhang mit Anspruch 2 für die beiden Referenzobjekte ausgeführt ist.

Die Anordnung der Kameras entsprechend den Ansprüchen 6 bis 8 kann dabei auch bei dem Verfahrensanspruch 9 zur Anwendung kommen.

Bei den nachfolgenden Figuren sind die geometrischen Verhältnisse im Zusammenhang mit den Referenzobjekten 301, 302, 303 erläutert. Es ist ersichtlich, dass dieselben geometrischen Verhältnisse auch für Referenzpunkte gelten, die in Bezug zum Lenkrad definiert sind.

Bei der Ausgestaltung nach Anspruch 9 müssen die drei Referenzpunkte am Lenkrad bekannt sein. Das bedeutet, dass das Verfahren nicht mehr unabhängig vom verbauten Lenkrad angewendet werden kann. Die Referenzpunkte hängen von der Lenkradgeometrie ab. Es ist daher ein erhöhter Aufwand bei der Auswertung zur Erkennung der lenkradspezifischen Merkmale (Erkennung der Referenzpunkte) notwendig.

Ein Ausführungsbeispiel der Erfindung ist in der Zeichnung dargestellt. Es zeigt dabei:
- Figur 1:: ein Fahrzeug in Draufsicht, das als Prinzipdarstellung sowohl als Rechtslenker- als auch als Linkslenkerfahrzeug dargestellt ist mit einer ersten Kameraanordnung,
- Figur 2:: ein Fahrzeug in Draufsicht, das als Prinzipdarstellung sowohl als Rechtslenker- als auch als Linkslenkerfahrzeug dargestellt ist mit einer zweiten Kameraanordnung,
- Figur 3:: eine erste Darstellung der Anbringung von drei Referenzobjekten an einem Lenkrad in Draufsicht auf das Lenkrad und
- Figur 4:: eine weitere Darstellung der Anbringung von drei Referenzobjekten an einem Lenkrad in einer Seitenansicht des Lenkrades.

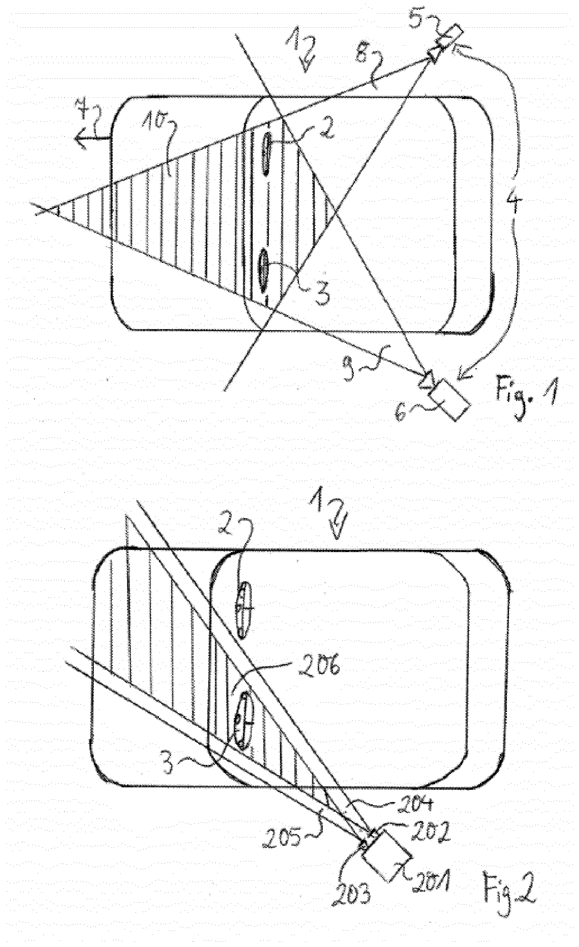

Figur 1 zeigt ein Fahrzeug 1 in Draufsicht, das als Prinzipdarstellung sowohl mit einem Lenkrad 2 auf der rechten Fahrzeugseite (Rechtslenkerfahrzeug) als auch mit einem Lenkrad 3 auf der linken Fahrzeugseite (Linkslenkerfahrzeug) dargestellt ist mit einer ersten Kameraanordnung 4, die aus einer Kamera 5 auf der rechten Fahrzeugseite sowie einer Kamera 6 auf der linken Fahrzeugseite besteht. Die Fahrtrichtung des Fahrzeugs ist mit dem Pfeil 7 bezeichnet.

Es ist zu sehen, dass die Kameras 5 bzw. 6 jeweils einen Raumwinkel 8 bzw. 9 aufweisen, der so groß ist, dass jeder dieser beiden Raumwinkel 8 bzw. 9 sowohl das rechte Lenkrad 2 als auch das linke Lenkrad 3 umfasst.

Die Schnittmenge 10 der beiden Raumwinkel 8 und 9 ist in der Figur 1 schraffiert dargestellt.

Damit wird es möglich, über die beiden Kameras 5, 6 im Bereich der Schnittmenge 10 eine 3d-Auswertung der Kamerabilder vorzunehmen.

Figur 2 zeigt ein Fahrzeug in Draufsicht, das als Prinzipdarstellung sowohl mit einem Lenkrad 2 auf der rechten Fahrzeugseite (Rechtslenkerfahrzeug) als auch mit einem Lenkrad 3 auf der linken Fahrzeugseite (Linkslenkerfahrzeug) dargestellt ist mit einer zweiten Kameraanordnung 201. Diese Kameraanordnung 201 weist zwei Kameras 202 und 203 auf, die jeweils einen Raumwinkel 204 bzw. 205 erfassen. Diese beiden Raumwinkel 204 und 205 haben wiederum eine gemeinsame Schnittmenge 206, die schraffiert dargestellt ist.

Es ist zu sehen, dass die beiden Raumwinkel 204 und 205 hinsichtlich ihrer Größe und Orientierung so ausgerichtet sind, dass das linke Lenkrad 3 in diesen beiden Raumwinkeln und damit auch in der Schnittmenge 206 dieser beiden Raumwinkel 204 und 205 liegt.

Damit ist es möglich, mit der Kameraanordnung 201 dieses linke Lenkrad 3 zu erfassen.

Das rechte Lenkrad 2 liegt außerhalb der Raumwinkel 204 und 205.

Um auch das rechte Lenkrad 2 erfassen zu können, wäre es möglich, eine zweite Kameraanordnung (hier nicht dargestellt) vorzusehen, die auf der rechten Fahrzeugseite angeordnet sein könnte. Diese Kameraanordnung würde ebenfalls zwei Kameras aufweisen. Die Raumwinkel dieser Kameras würden das rechte Lenkrad 2 einschließen.

Alternativ könnte auch die Kameraanordnung 201 verfahrbar sein, so dass diese entweder auf die rechte Fahrzeugseite bewegbar wäre auf eine definierte Position und eine definierte Ausrichtung von deren Raumwinkeln, so dass das rechte Lenkrad 2 erfasst werden kann.

Alternativ wäre es auch vorstellbar, die Kameraanordnung 201 so verdrehbar auszugestalten, dass deren Raumwinkel aufgrund der Verdrehung das rechte Lenkrad 2 erfassen.

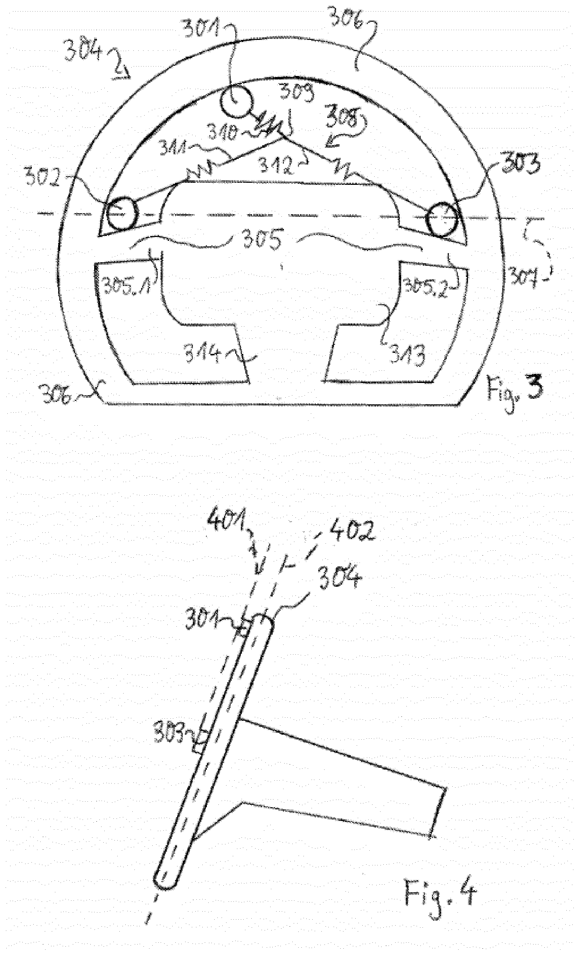

Figur 3 zeigt eine erste Darstellung der Anbringung von drei Referenzobjekten 301, 302, 303 an einem Lenkrad 304 in Draufsicht auf das Lenkrad. Die drei Referenzobjekte 301, 302, 303 sind an dem Lenkrad 304 lösbar befestigbar.

Es ist möglich, mittels einer aus zwei Kameras bestehenden Kameraanordnung die Lage der drei Referenzobjekte 301, 302, 303 im Raum zu bestimmten. Über die Lage dieser drei Referenzobjekte 301, 302, 303 im Raum ist die Ebene definiert, in der diese drei Referenzobjekte 301, 302, 303 liegen. Damit ist auch die Ebene des Lenkrades 304 definiert, weil die Referenzobjekte 301, 302, 303 eindeutig zu dieser Lenkradebene an dem Lenkrad 304 befestigt sind.

Es ist zu sehen, dass zwei (302, 303) der wenigstens drei Referenzobjekte 301, 302, 303 jeweils im Bereich des oberen Übergangs von einer Quertraverse 305 im Lenkrad 304 zum Lenkradkranz 306 angeordnet, wobei eines dieser beiden Referenzobjekte 302 auf der linken Seite der Quertraverse 305 befestigbar ist und das andere dieser beiden Referenzobjekte 303 auf der rechten Seite der Quertraverse 305. Die Quertraverse 305 besteht aus den beiden Teilen 305.1 und 305.2, die jeweils von dem Kreis 313 um die Mittelachse des Lenkrades 304 abgehen.

Lenkräder 304 weisen üblicherweise eine Quertraverse 305 auf, über die der Lenkradkranz 306 an der Mittelachse des Lenkrades 304 befestigt ist. Oberhalb dieser Quertraverse 305 ist das Lenkrad 304 üblicherweise zum Lenkradkranz 306 hin offen. Dadurch wird es dem Fahrzeugführer ermöglicht, die Anzeigeelemente im Kombiinstrument des Armaturenbretts bei einer "Geradeaus-Stellung" des Lenkrades 304 bzw. einem geringen Lenkradeinschlag im Blick zu behalten. Gegebenenfalls haben die Lenkräder 304 noch ein Verbindungselement 314 von der Mittelachse des Lenkrades 304 nach unten zum Lenkradkranz 306.

Es ist zu sehen, dass der Lenkradkranz 306 auf der Unterseite (bei Geradeausstellung des Lenkrades 304) nicht kreisförmig verläuft sondern die (gedachte) kreisförmige Fortsetzung des Lenkradkranzes 306 als Sekante abschneidet. Es ist auch zu sehen, dass die drei Referenzobjekte 301, 302, 303 durch deren Anbringung oberhalb der Quertraverse 305 von dieser geometrischen Form des Lenkrades 304 nicht beeinflusst werden.

Durch die dargestellte Ausführungsform sind die beiden Referenzobjekte 302, 303 jeweils an einem definierten Punkt des Lenkrades 304 angebracht. Weiterhin sind diese beiden Punkte bei üblichen Lenkrädern 304 achsensymmetrisch bezüglich einer Mitteillinie in der Lenkradebene, die in vertikaler Richtung (d.h. von dem untersten Punkt des Lenkradkranzes zum obersten Punkt des Lenkradkranzes) durch den Mittelpunkt des Lenkrades 304 verläuft.

Das bedeutet, dass bei einem optimal justierten Lenkrad 304 bei einer Geradeausfahrt die Verbindungslinie 307 dieser beiden Referenzobjekte 302, 303 horizontal verläuft. Die Neigung dieser Verbindungslinie 307 gegenüber der Schnittgeraden, die zwischen einer horizontalen Ebene und der durch alle drei Referenzobjekte ermittelten Lenkradebene entsteht, stellt den Lenkradeinschlagwinkel dar.

Damit wird es möglich, zu ermitteln, ob der Lenkradeinschlagwinkel seinem Sollwert entspricht. Der Lenkradeinschlagwinkel entspricht üblicherweise seinem Sollwert, wenn bei einem Lenkwinkel der Räder des Fahrzeugs, der einer Geradeausfahrt entspricht, die Verbindungslinie 307 der beiden Referenzobjekte 302, 303 horizontal verläuft.

Bei einer Auswertung der Position der beiden Referenzobjekte 302, 303 in Verbindung mit dem dritten Referenzobjekt 301 kann die Ebene des Lenkrades bestimmt werden.

Es ist weiterhin zu sehen, dass die drei Referenzobjekte 301, 302, 303 mittels eines Rahmens 308 miteinander verbunden sind. Der Rahmen 308 besteht aus drei an einem ihrer Enden in einem gemeinsamen Mittelpunkt 309 miteinander verbundenen Längselementen 310, 311, 312. Die Referenzobjekte 301, 302, 303 sind jeweils an dem anderen Ende der Längselemente 310, 311, 312 derart befestigt, dass die Referenzobjekte 301, 302, 303 dabei in Längsrichtung der Längselemente 310, 311, 312 gedrückt werden. Diese Befestigung kann vorteilhaft federelastisch sein. Damit lässt sich der Rahmen 308 mit den Referenzobjekten 301, 302, 303 in einfacher Weise von einem Werker an einem Lenkrad 304 befestigen.

Da die beiden Referenzobjekte 302, 303 jeweils an einer definierten Position auf dem Lenkrad angebracht sind, lässt sich über diese beiden Referenzobjekte 302, 303 unter Berücksichtigung des dritten Referenzpunktes 301 der Lenkradeinschlagwinkel bestimmen. Für die weitere Bestimmung der Lage der Ebene des Lenkrades 304 muss das dritte Referenzobjekt 301 nicht an einer definierten Position auf dem Lenkrad angebracht werden. Dieses Referenzobjekt 301 kann für diese Auswertung beispielsweise auch versetzt zur Symmetrieachse des Lenkrades angebracht sein, wie dies in der Darstellung der Figur 3 zu sehen ist.

Dies Ausführung der Rahmens 308 mit der federelastischen Anbringung der Referenzobjekte 301, 302, 303 stellt eine einfache Möglichkeit dar, die lösbare Befestigung der drei Referenzobjekte 301, 302, 303 am Lenkrad 304 zu realisieren. Die Referenzobjekte 301, 302, 303 können zusätzlich noch so geformt sein, dass diese im Wesentlichen zylinderförmig ausgestaltet und drehbar um die Mittelachse des Zylinders gelagert sind. Die Zylindermantelfläche kann der Innenseite des Innenteils eines Torus entsprechen, der kreisförmig aufgeschnitten ist.

Da der Lenkradkranz torusförmig ist, ergibt sich bei einer solchen Ausgestaltung besonders vorteilhaft, dass das jeweilige Referenzobjekt 301, 302, 303 in einer definierten Lage am Lenkradkranz 306 anliegt.

Auch wenn die Form der Referenzobjekte 301, 302, 303 weniger optimiert an die geometrische Form des Lenkradkranzes 306 angepasst ist, ergibt sich durch die federelastische Lagerung, dass die Referenzobjekte 310, 302, 303 definiert an den Lenkradkranz 306 angedrückt werden.

Weiterhin ist zu sehen, dass der Mittelpunkt 309 des Rahmens 308 oberhalb der Verbindungslinie 307 der beiden unteren Referenzobjekte 302, 303 liegt.

Damit kann vorteilhaft geometrischen Randbedingungen Rechnung getragen werden, die sich aus der üblichen Gestaltung von Lenkrädern 304 ergeben. Zum einen kommt es bei Lenkrädern häufig vor, dass die Quertraverse 305 nicht exakt horizontal verläuft sondern dass die Quertraverse 305 aus zwei Elementen 305.1 und 305.2 besteht, die vom Mittelpunkt des Lenkrades 304 ausgehend schräg nach unten verlaufen. Weiterhin kommt es häufig vor, dass der Mittelpunkt des Lenkrades 304 als Kreis 313 ausgebildet ist, in den beispielsweise das Betätigungselement für die Hupe integriert ist. Die Breite der Quertraverse 305 ist deswegen häufig geringer als dies dem Durchmesser des Kreises 313 des Lenkrades 304 um den Mittelpunkt entspricht.

Mit der beschriebenen geometrischen Ausbildung und Anordnung des Rahmens 308 kann dem Rechnung getragen werden, wobei dennoch die beiden entsprechenden Referenzobjekte 302, 303 jeweils im Bereich des oberen Übergangs der Quertraverse 305.1, 305.2 im Lenkrad zum Lenkradkranz 306 angeordnet werden können.

Vorteilhaft weist bei dieser Ausgestaltung der Rahmen 308 sowohl zur Quertraverse 305 als auch zum Kreis 313 um den Mittelpunkt des Lenkrades 304 einen Abstand auf, so dass der Rahmen 308 (und damit auch die Referenzobjekte 301, 302, 303) einfach montiert und wieder gelöst werden können.

Figur 4 zeigt eine weitere Darstellung der Anbringung der Referenzobjekte 301, 303 an einem Lenkrad 304 in einer Seitenansicht des Lenkrades.

In Figur 4 ist zu sehen, dass die Referenzobjekte 301, 303 (das Referenzobjekt 302 ist hier durch das Referenzobjekt 303 verdeckt und nicht zu sehen, aber dennoch vorhanden) eine Ebene 401 aufspannen, die parallel ist zur Ebene 402 des Lenkrades 304.

Die Vorrichtung ist wegen der Anpassung an die Grundkonstruktion von verschiedenen Lenkradtypen flexibel einsetzbar. Dies erweist sich insbesondere auch deshalb als vorteilhaft, weil es zu den einzelnen Fahrzeugtypen abhängig von der Fahrzeugausstattung verschiedene Lenkräder gibt, die verbaut werden können. Durch die Anpassung der Vorrichtung an Grundelemente der Konstruktion der Lenkräder ist die Vorrichtung flexibel einsetzbar.

Die Referenzobjekte sind vorteilhaft in Farbe (bzw. einem Muster) und Form so gestaltet, dass diese einen möglichst guten Kontrast zur Umgebung darstellen.

Unter Verwendung von Bildverarbeitungsmethoden der Photogrammetrie kann die Neigung des Lenkrades und der Lenkradeinschlagwinkel ermittelt werden.

Eine Kalibrierung des Systems kann entweder über eine spezielle Referenzobjektanordnung mit einem definierten Muster und einer definierten Position erfolgen oder auch über die Anordnung der Referenzobjektanordung in einer definierten Position. Die Referenzobjektanordnung betrifft die Anordnung der drei Referenzobjekte.

## Patentansprüche

1. Vorrichtung zur Ermittlung der Lenkradstellung, des Lenkradeinschlagwinkels und der Neigung des Lenkrades (304) eines Fahrzeugs,
wobei die Vorrichtung wenigstens zwei Kameras (5, 6; 202, 203) aufweist, mit denen das Lenkrad (304) aufnehmbar ist (8, 9; 204, 205),
wobei wenigstens drei Referenzobjekte (301, 302, 303) vorhanden sind, die an dem Lenkrad (304) lösbar befestigbar sind,
**dadurch gekennzeichnet, dass** die Vorrichtung eingerichtet ist, auf Basis der aufgenommenen Bilder Bildverarbeitungsmethoden der Photogrammetrie durchzuführen, um die Neigung des Lenkrades und den Lenkradeinschlagwinkel zu ermitteln.

2. Vorrichtung nach Anspruch 1,
**dadurch gekennzeichnet, dass** bei der lösbaren Befestigung zwei (302, 303) der wenigstens drei Referenzobjekte (301, 302, 303) jeweils im oberen Übergang von einer Quertraverse (305) im Lenkrad (304) zum Lenkradkranz (306) des Lenkrads (304) oder in einem definierten Abstand zu diesem Übergang mit einer definierten Richtung zu diesem Übergang angeordnet sind, wobei eines dieser beiden Referenzobjekte (302) auf der linken Seite der Quertraverse (305.1) des Lenkrads (304) befestigbar ist und das andere dieser beiden Referenzobjekte (303) auf der rechten Seite der Quertraverse (305.2) des Lenkrads (304), wobei diese beiden Referenzobjekte (302, 303) von dem wenigstens einen weiteren Referenzobjekt (301) unterscheidbar sind.

3. Vorrichtung nach Anspruch 2,
**dadurch gekennzeichnet, dass** Referenzhilfsobjekte Bestandteil des Vorrichtung sind, die im montierten Zustand außerhalb des Lenkradumfangs angeordnet sind und die jeweils zu einem der beiden Referenzobjekte (302, 303), die sich jeweils im oberen Übergang von einer Quertraverse (305) im Lenkrad (304) zum Lenkradkranz (306) des Lenkrads (304) oder in einem definierten Abstand zu diesem Übergang mit einer definierten Richtung zu diesem Übergang befinden, derart zugeordnet sind, dass die Verbindungslinie (307) zwischen den beiden Referenzhilfsobjekten mit der Verbindungslinie (307) der beiden genannten Referenzobjekte (302, 303) übereinstimmt oder parallel zu dieser verläuft.

4. Vorrichtung nach einem der Ansprüche 1 bis 3,
**dadurch gekennzeichnet, dass** die Vorrichtung einen Rahmen (308) für die drei Referenzobjekte (301, 302, 303) aufweist, wobei die drei Referenzobjekte (301, 302, 303) mittels des Rahmens (308) miteinander verbunden sind, wobei der Rahmen (308) aus drei an einem ihrer Enden in einem gemeinsamen Mittelpunkt (309) miteinander verbundenen Längselementen (310, 311, 312) besteht, wobei die Referenzobjekte (301, 302, 303) jeweils an dem anderen Ende der Längselemente (310, 311, 312) derart federelastisch befestigt sind, dass die Referenzobjekte (301, 302, 303) dabei in Längsrichtung der Längselemente (310, 311, 312) gedrückt werden.

5. Vorrichtung nach Anspruch 4,
**dadurch gekennzeichnet, dass** bei einer Befestigung der drei Referenzobjekte (301, 302, 303) am Lenkrad (304) der Mittelpunkt (309) des Rahmens (308) oberhalb der Verbindungslinie (307) der beiden unteren Referenzobjekte (302, 303) liegt.

6. Vorrichtung nach einem der Ansprüche 1 bis 5,
**dadurch gekennzeichnet, dass** die beiden Kameras (202, 203) auf derselben Fahrzeugseite außerhalb des Fahrzeugs (1) angeordnet sind.

7. Vorrichtung nach Anspruch 6,
**dadurch gekennzeichnet, dass** jede der beiden Kameras (202, 203) jeweils einen Raumwinkel aufweist, mit dem die Erfassung eines Lenkrades (2, 3) für beide Kameras (202, 203) entweder auf der rechten Fahrzeugseite oder auf der linken Fahrzeugseite möglich ist, wobei beide Kameras (202, 203) dasselbe Lenkrad (2, 3) erfassen.

8. Vorrichtung nach einem der Ansprüche 1 bis 5,
**dadurch gekennzeichnet, dass** die beiden Kameras (5, 6) auf unterschiedlichen Fahrzeugseiten angeordnet sind, wobei jede der beiden Kameras (5, 6) jeweils einen Raumwinkel (8, 9) aufweist, mit dem die Erfassung eines Lenkrades (2, 3) für beide Kameras (5, 6) sowohl auf der rechten Fahrzeugseite als auch auf der linken Fahrzeugseite möglich ist.

9. Verfahren zur Erfassung der Lenkradstellung, des Lenkradeinschlagwinkels und der Neigung des Lenkrades (304) eines Fahrzeugs,
**dadurch gekennzeichnet, dass** das Lenkrad (304) mittels wenigstens zwei Kameras (5, 6; 202, 203) aufgenommen wird, wobei von den wenigstens zwei Kameras (5, 6; 202, 203) wenigstens drei Referenzpunkte (301, 302, 303) an dem Lenkrad erfasst werden, wobei auf Basis der aufgenommenen Bilder Bildverarbeitungsmethoden der Photogrammetrie durchgeführt werden, um die Neigung des Lenkrades und den Lenkradeinschlagwinkel zu ermitteln.

## Claims

1. Device for detecting the steering wheel position, the steering wheel angle and the inclination of the steering wheel (304) of a vehicle,
wherein the device comprises at least two cameras (5, 6; 202, 203) by means of which the steering wheel (304) can be sensed (8, 9; 204, 205), wherein at least three reference objects (301, 302, 303) are provided which can be releasably fastened to the steering wheel (304),
**characterised in that** the device is arranged to perform image processing methods of photogrammetry on the basis of the captured images in order to determine the inclination of the steering wheel and the steering wheel angle.

2. Device according to claim 1,
**characterized in that**, in the case of the releasable fastening, two (302, 303) of the at least three reference objects (301, 302, 303) are in each case arranged in the upper transition of a crosspiece (305) in the steering wheel (304) to the steering wheel rim (306) of the steering wheel (304) or at a defined distance to this transition with a defined direction to this transition, wherein one of said two reference objects (302) can be fastened on the left-hand side of the crosspiece (305.1) of the steering wheel (304) and the other of said two reference objects (303) can be fastened on the right-hand side of the crosspiece (305.2) of the steering wheel (304), wherein said two reference objects (302, 303) can be distinguished from the at least one further reference object (301).

3. Device according to claim 2,
**characterized in that** reference aids are part of the device, which in the mounted state are arranged outside the periphery of the steering wheel and are in each case associated with one of the two reference objects (302, 303), located in each case in the upper transition of a crosspiece (305) in the steering wheel (304) to the steering wheel rim (306) of the steering wheel (304) or at a defined distance to this transition, such that the connecting line (307) between the two reference aids coincides with or extends in parallel with the connecting line (307) of the two reference objects (302, 303) mentioned.

4. Device according to any of claims 1 to 3,
**characterized in that** the device comprises a frame (308) for the three reference objects (301, 302, 303), wherein the three reference objects (301, 302, 303) are interconnected by means of the frame (308), wherein the frame (308) consists of three longitudinal elements (310, 311, 312) that are interconnected, at a common center point (309), at one of the ends thereof, wherein the reference objects (301, 302, 303) are in each case resiliently fastened at the other end of the longitudinal elements (310, 311, 312), such that the reference objects (301, 302, 303) can in this case be pushed in the longitudinal direction of the longitudinal elements (310, 311, 312).

5. Device according to claim 4,
**characterized in that**, when the three reference objects (301, 302, 303) are fastened to the steering wheel (304), the center point (309) of the frame (308) is located above the connecting line (307) of the two bottom reference objects (302, 303).

6. Device according to any of claims 1 to 5,
**characterized in that** the two cameras (202, 203) are arranged on the same side of the vehicle, outside the vehicle (1).

7. Device according to claim 6,
**characterized in that** each of the two cameras (202, 203) in each case has a solid angle that allows for a steering wheel (2, 3) to be detected by both cameras (202, 203), either on the right-hand side of the vehicle or on the left-hand side of the vehicle, wherein both cameras (202, 203) detect the same steering wheel (2, 3).

8. Device according to any of claims 1 to 5,
**characterized in that** the two cameras (5, 6) are arranged on different sides of the vehicle, wherein each of the two cameras (5, 6) in each case has a solid angle (8, 9) that allows for a steering wheel (2, 3) to be detected by both cameras (5, 6), both on the right-hand side of the vehicle and on the left-hand side of the vehicle.

9. Method for detecting the steering wheel position, the steering wheel angle and the inclination of the steering wheel (304) of a vehicle,
**characterized in that** the steering wheel (304) is sensed by at least two cameras (5, 6; 202, 203), wherein the at least two cameras (5, 6; 202, 203) detect at least three reference points (301, 302, 303) on the steering wheel, wherein image processing methods of photogrammetry are carried out on the basis of the captured images in order to determine the inclination of the steering wheel and the steering wheel angle.

## Revendications

1. Dispositif pour déterminer la position du volant, l'angle du volant et l'inclinaison du volant (304) d'un véhicule,
selon lequel le dispositif comporte au moins deux caméras (5, 6 ; 202, 203) avec lesquelles le volant (304) peut être filmé (8, 9 ; 204, 205)
dans lequel au moins trois objets de référence (301, 302, 303) sont présents et peuvent être fixés de manière amovible au volant (304),
**caractérisé en ce que** le dispositif est agencé pour exécuter des procédés de traitement d'image de photogrammétrie sur la base des images capturées afin de déterminer l'inclinaison du volant et l'angle de rotation du volant.

2. Dispositif selon la demande 1,
**caractérisé en ce que**, lors de la fixation amovible, deux (302, 303) des au moins trois objets de référence (301, 302, 303) sont disposés chacun dans la transition supérieure d'une traverse (305) dans le volant (304) vers la couronne de volant (306) du volant (304) ou à une distance définie de cette transition avec une direction définie vers cette transition, l'un de ces deux objets de référence (302) pouvant être fixé sur le côté gauche de la traverse (305.1) du volant (304) et l'autre de ces deux objets de référence (303) pouvant être fixé sur le côté droit de la traverse (305.2) du volant (304), ces deux objets de référence (302, 303) pouvant être distingués du au moins un autre objet de référence (301).

3. Dispositif selon la revendication 2,
**caractérisé en ce que** le dispositif comprend des objets auxiliaires de référence qui, à l'état monté, sont disposés à l'extérieur de la circonférence du volant et qui sont associés chacun à l'un des deux objets de référence (302, 303) qui se trouvent chacun dans la transition supérieure d'une traverse (305) dans le volant (304) vers la couronne (306) du volant (304) ou à une distance définie de cette transition avec une direction définie vers cette transition, associés de telle sorte que la ligne de liaison (307) entre les deux objets auxiliaires de référence correspond à la ligne de liaison (307) des deux dits objets de référence (302, 303) ou est parallèle à celle-ci.

4. Dispositif selon l'une quelconque des revendications 1 à 3,
**caractérisé en ce que** le dispositif comprend un cadre (308) pour les trois objets de référence (301, 302, 303), les trois objets de référence (301, 302, 303) étant reliés les uns aux autres au moyen du cadre (308), le cadre (308) étant constitué de trois éléments longitudinaux (310, 311, 312) reliés entre eux à l'une de leurs extrémités en un point central commun (309), les objets de référence (301, 302, 303) étant chacun fixés de manière élastique à l'autre extrémité des éléments longitudinaux (310, 311, 312) de telle sorte que les objets de référence (301, 302, 303) sont ainsi pressés dans la direction longitudinale des éléments longitudinaux (310, 311, 312).

5. Dispositif selon la revendication 4,
**caractérisé en ce que**, lors de la fixation des trois objets de référence (301, 302, 303) au volant (304), le centre (309) du cadre (308) se trouve au-dessus de la ligne de liaison (307) des deux objets de référence inférieurs (302, 303).

6. Dispositif selon l'une des revendications 1 à 5,
**caractérisé en ce que** les deux caméras (202, 203) sont disposées sur le même côté du véhicule à l'extérieur du véhicule (1).

7. Dispositif selon la revendication 6,
**caractérisé en ce que** chacune des deux caméras (202, 203) a un angle solide respectif avec lequel la détection d'un volant (2, 3) est possible pour les deux caméras (202, 203) soit sur le côté droit du véhicule, soit sur le côté gauche du véhicule, les deux caméras (202, 203) détectant le même volant (2, 3).

8. Dispositif selon l'une des revendications 1 à 5,
**caractérisé en ce que** les deux caméras (5, 6) sont disposées sur des côtés différents du véhicule, chacune des deux caméras (5, 6) présentant un angle solide respectif (8, 9) avec lequel la détection d'un volant (2, 3) est possible pour les deux caméras (5, 6) aussi bien sur le côté droit du véhicule que sur le côté gauche du véhicule.

9. Procédé pour détecter la position du volant, l'angle de rotation du volant et l'inclinaison du volant (304) d'un véhicule,
**caractérisé en ce que** le volant (304) est filmé au moyen d'au moins deux caméras (5, 6 ; 202, 203), au moins trois points de référence (301, 302, 303) sur le volant étant saisis par les au moins deux caméras (5, 6 ; 202, 203), des procédés de traitement d'images photogrammétriques étant effectués sur la base des images enregistrées afin de déterminer l'inclinaison du volant et l'angle de rotation du volant.
